# EUROPEAN PATENT APPLICATION

(11) **EP 1 387 556 A1**
(43) Date of publication of application: **04.02.2004**
(21) Application number: 03017377.7
(22) Date of filing: 31.07.2003
(51) Int. Cl.: H04M 11/06

(54) **ADSL modem apparatus and ADSL modem communication method**

(30) Priority: 02.08.2002 JP 2002226531
(71) Applicant: Panasonic Communications Co., Ltd., Fukuoka-shi, Fukuoka 812-8531 (JP)
(72) Inventor: Noma, Nobuhiko, Yokohama-shi, Kanagawa 227-0033 (JP); Imai, Tatsuo, Chigasaki-shi, Kanagawa 253-0005 (JP); Tomita, Keiichi, Yokohama-shi, Kanagawa 222-0032 (JP)
(74) Representative: Grünecker, Kinkeldey, Stockmair & Schwanhäusser Anwaltssozietät

(57) **Abstract**

A center side transmits a downstream signal by using a specified carrier preset by a communication standard, when a handshake sequence is initiated, and retransmits a downstream signal by using an alternate carrier shifted toward a higher frequency instead of a specified carrier in the proximity of carriers used for the upstream, when a line connection with an opposing ADSL modem apparatus fails during the signal transmission using the specified carrier. Further, a remote side detects a signal of a specified carrier preset by a communication standard from downstream, when a handshake sequence is initiated, and detects an alternate carrier signal in accordance with a carrier change made by the transmitter side, when the signal of the specified carrier fails to be received within a predetermined time since the initiation of the handshake sequence.

## Description

### BACKGROUND OF THE INVENTION

### 1. Field of the Invention

The present invention relates to an ADSL communication modem apparatus that adheres to the ITU-T recommended G.994.1 (hereafter referred to as G.hs) standard, and an ADSL communication and an ADSL communication method that improve the above standard communication method.

### 2. Description of Related Art

The ADSL communication standard G.hs regulates a handshake sequence. When a center side apparatus transmits a downstream signal to a remote side apparatus, and the remote side apparatus transmits an upstream signal to the center side apparatus the handshake sequence is executed that exchanges information between the center and remote sides.

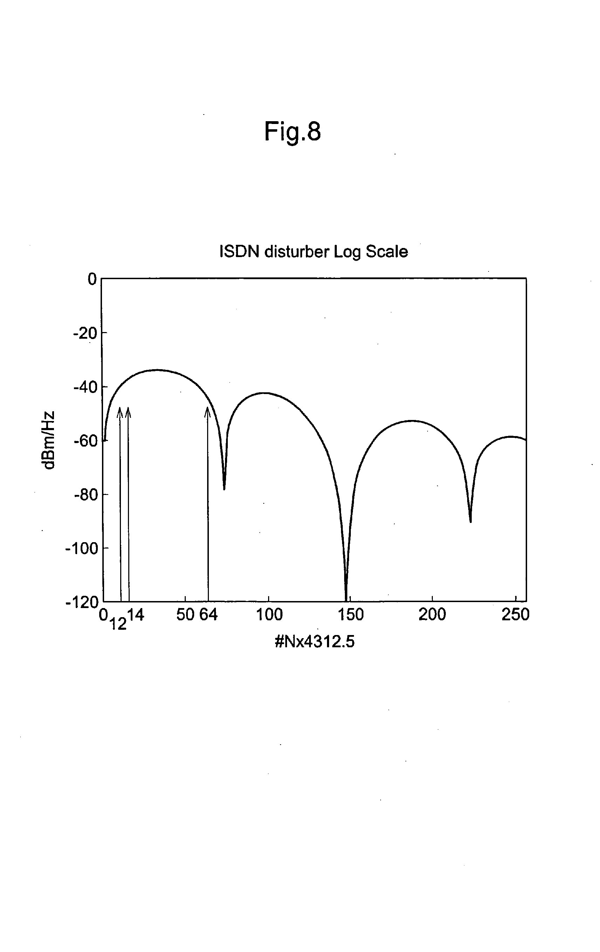

ANNEX.C of G.hs uses carrier indexes #7 and #9 for the upstream, and carrier indexes #12, #14, and #64 for the downstream. This is in order to execute the handshake sequence that withstands the interference of ISDN noise for ANNEX.C of G.hs, by using carrier indexes #12 and #14 that are in a carrier frequency band where the ISDN noise becomes decreased in the downstream. Fig. 8 illustrates the above-described relationship, where carriers in a band that has little interference of the ISDN are selected. These carriers are used for the handshake sequence. During an initialization sequence, other carriers are used, in order to execute a SHOWTIME (data transmission) sequence.

However, frequency gaps between carrier indexes #7 and #9 and indexes #12 and #14 are small. Therefore, in a long distance setting between the remote and center side apparatuses, it becomes difficult for the remote side to receive downstream carriers (indexes #12 and #14), because of a skirt phenomenon of upstream carriers (indexes #7 and #9).

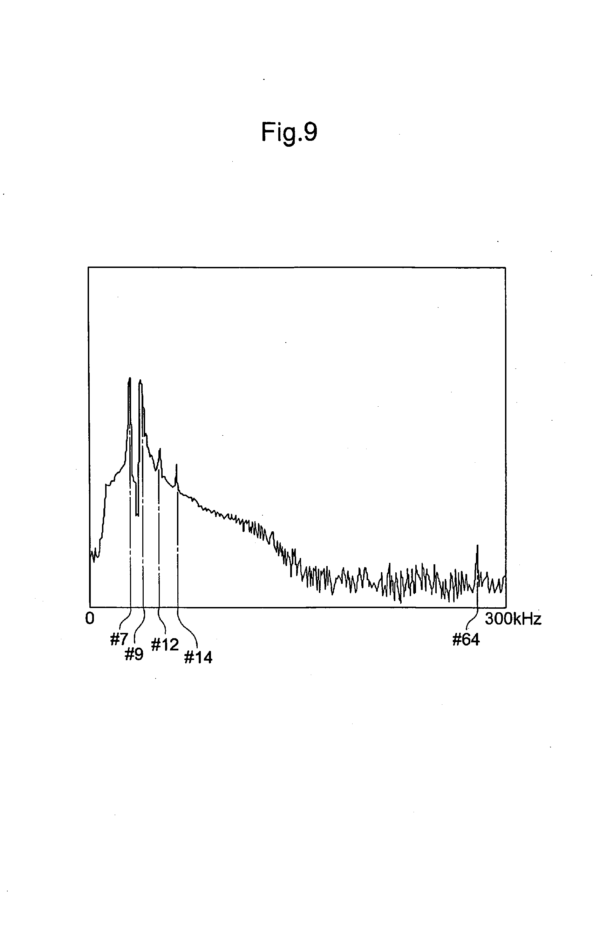

Fig. 9 illustrates a spectrum of the remote side apparatus. As shown in the figure, downstream carriers (indexes #12 and #14) become interfered because of a skirt phenomenon of upstream carriers (indexes #7 and #9). Especially, when there is a long distance between the remote and center sides, the downstream carriers (indexes #12 and #14) have a large attenuation amount,. thereby complicating the signal reception.

### SUMMARY OF THE INVENTION

The present invention is provided to address the above-described problem. The purpose of the invention is to provide an ADSL modem apparatus and an ADSL modem communication method that can decrease the interference from an upstream signal to a downstream signal (due to the upstream signal skirt phenomenon) even for a long distance communication.

According to the present invention, an ADSL modem apparatus at a center side comprises a transmitter that transmits a downstream signal by using a specified carrier preset by a communication standard, when a handshake sequence is initiated, and a re-transmitter that retransmits a downstream signal by using an alternate carrier shifted toward a higher frequency, instead of the specified carrier in the proximity of carriers used for the upstream, when a line connection with an opposing ADSL modem apparatus fails during the signal transmission using the specified carrier.

Further, an ADSL modem apparatus at a remote side comprises a receiver that detects a signal of a specified carrier preset by a communication standard from a downstream signal, when a handshake sequence is initiated, and a re-receiver that detects an alternate carrier signal in accordance with a carrier change made by the transmitter side, when the signal of the specified carrier fails to be normally received within a predetermined time since the initiation of the handshake sequence.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 illustrates a communication system of a remote side, according to an embodiment of the present invention;
Fig. 2 is a functional block diagram of a transceiver shown in Fig. 1;
Fig. 3 (a) illustrates a startup sequence when the sequence is initiated from a remote side;
Fig. 3 (b) illustrates a startup sequence when the sequence is initiated from a center side;
Fig. 4 is a flowchart for a handshake sequence between the center and remote sides, according to the embodiment of the present invention;
Fig. 5 (a) illustrates a carrier table indicating carriers to be initially used during the handshake sequence at the center side;
Fig. 5 (b) illustrates a carrier table indicating carriers to be used after a change has been made during the handshake sequence at the center side;
Fig. 6 (a) illustrates a carrier table indicating carriers to be monitored during the handshake sequence at the remote side;
Fig. 6 (b) illustrates a carrier table indicating carriers to be monitored after a change has been made during the handshake sequence at the remote side;
Fig. 7 illustrates a relation between a reception spectrum and carrier shifting at the remote side, according to the embodiment of the present invention;
Fig. 8 illustrates a relation between a spectrum and ISDN signals in accordance with G.hs; and
Fig. 9 illustrates a state where a downstream signal is interfered by an upstream signal during the handshake sequence.

### DETAILED DESCRIPTION OF PREFERRED EMBODIMENTS

The embodiments of the present invention are explained in the following, in reference to the above-described drawings.

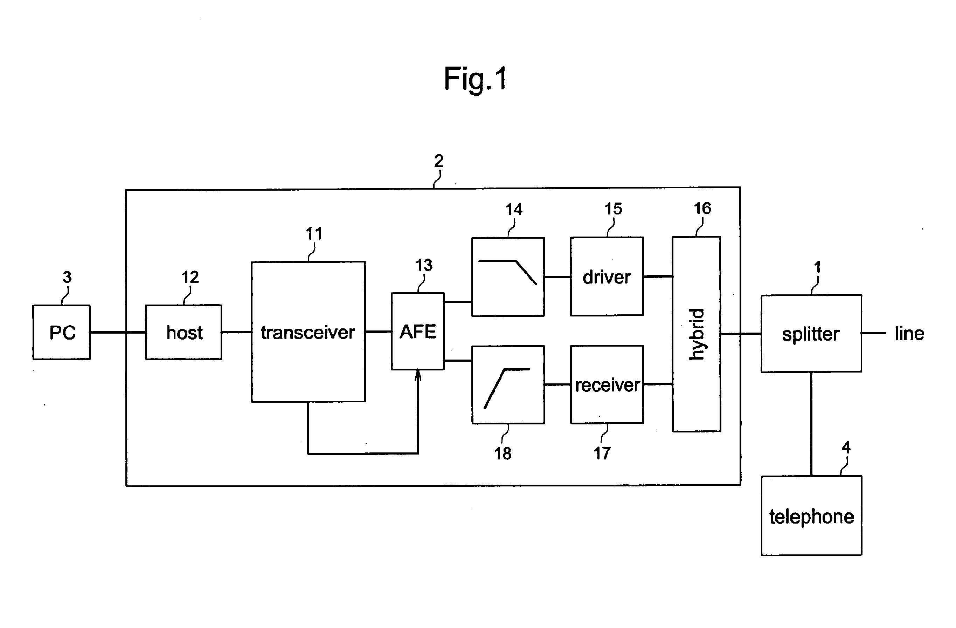

Fig. 1 illustrates a diagram of a communication system at the HSTU-R side according to the present invention. In the communication system as illustrated in Fig. 1, a public phone line or a similar phone line (hereafter referred to as line) is connected to ADSL communication apparatus 2 via splitter 1. Further, user terminal 3 is connected to ADSL communication apparatus 2. When user terminal 3 and telephone 4 share one line, splitter 1 is necessary. However, when telephone 4 is not used, splitter 1 is not needed. It is also possible to have a configuration where user terminal 3 internally installs ADSL communication apparatus 2.

ADSL communication apparatus 2 includes transceiver 11 that executes a handshake sequence and an initialization sequence (which will be later-described), and host 12 that controls the entire operation including the one of transceiver 11. At the line side of transceiver 11, units are configured with an analog circuit via an analog front end (hereafter referred to as AFE). Driver 15 is connected to a DA converter of AFE 13 via analog filter 14, so that an analog signal amplified by driver 15 is transmitted to the line via hybrid 16. The analog signal transmitted from the line is received by receiver 17 via hybrid 16, and then input into an AD converter of AFE 13 via analog filter 18. When sampling data is output from the AD converter, AFE 13 outputs the data to transceiver 11.

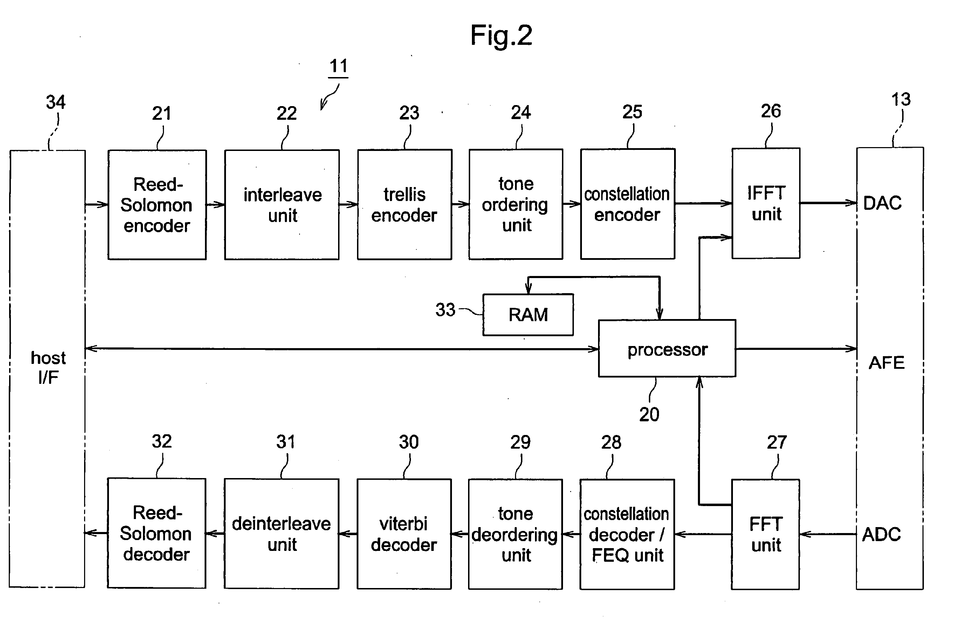

Fig. 2 is a functional block diagram illustrating transceiver 11. Processor 20 has a function to execute the handshake step and initialization step prior to initiating data transmission (SHOWTIME).

The transmission side of transceiver 11 includes Reed-Solomon encoder 21 that adds a redundancy bit for checking error, interleave unit 22 that sorts data to enable a burst error correction during Reed-Solomon decoding, Trellis encoder 23 that performs data convolution from a Trellis encoding, tone ordering unit 24 that lays out a bit number for each carrier, constellation encoder 25 that allocates topology of the transmission data on constellation coordinates, and IFFT unit 26 that performs an Inverse Fast Fourier Transform (hereafter referred to as IFFT) on data after the constellation encoding process.

The reception process side of transceiver 11 includes FFT unit 27 that performs a Fast Fourier Transform (hereafter referred to as FFT) on sampling data of the received signal, constellation decoder/FEQ unit 28 that decodes data from constellation data of the FFT output signal and corrects a topology on the constellation coordinates, tone de-ordering unit 29 that restores data laid out to each carrier after tone ordering process at the transmission side, Viterbi decoder 30 that performs Viterbi decoding on the received data, de-interleave unit 31 that restores data being resorted by the transmission side, and Reed-Solomon decoder 32 that deletes the redundancy bit added by the transmission side. RAM 33 is a work area of processor 20, which will be used for executing handshake and initialization sequences. In addition, RAM 33 includes a carrier table (later described). Transceiver 11 is connected to host 12 via host interface (I/F) 34.

An ADSL modem apparatus at the center side is connected to ADSL modem apparatus 2 via a metallic cable. The ADSL modem apparatus at the center side has the same configuration as ADSL communication apparatus 2. Telephone 4 is not included when the center side is an exchange set by a communication industry.

The following illustrates in detail an operation of the current embodiment with the above-described configuration, especially focusing on the operation for executing the handshake sequence.

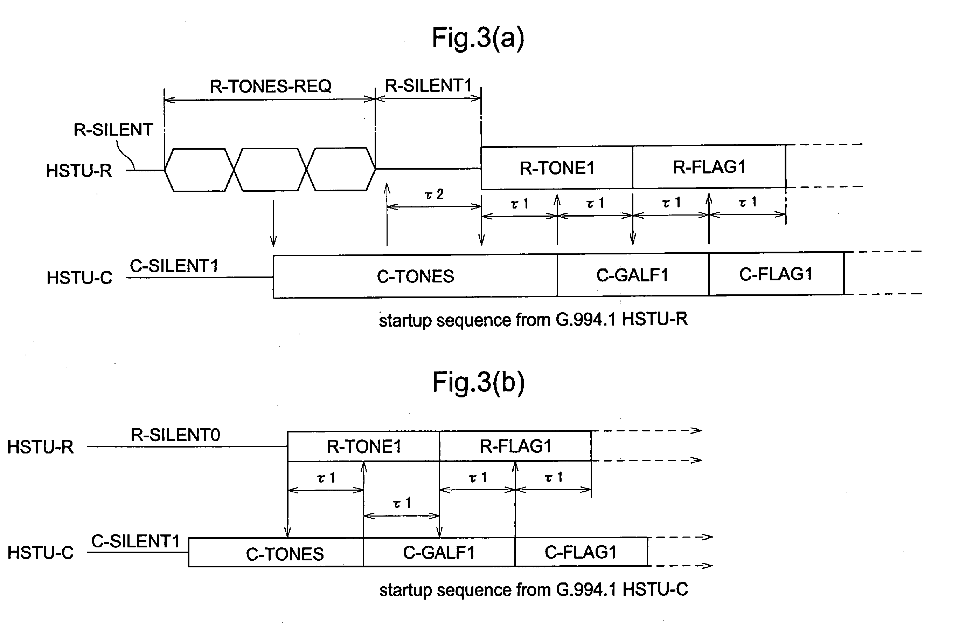

Fig. 3 (a) is a sequence chart illustrating a startup sequence initiated by the remote side in accordance with G.hs. As shown in the figure, the remote side initially transmits R-TONES-REQ to the upstream using carrier indexes #7 and #9. This signal is a signal inverted from a topology at every 16 ms.

The center side, recognizing that the signal is a G.hs signal from the signal frequencies and topology inversion, transmits C-TONES to the downstream using carrier indexes #12, #14, and #64.

Upon receiving R-TONES, the remote side makes adjustments to the frequencies and gain amount. Then, the remote side transmits R-TONE1 to the upstream using carrier indexes #7 and #9.

Upon receiving C-TONE1, the center side makes adjustment to the frequencies and gain amount. Then, the center side transmits C-GALF1 to the downstream using carrier indexes #12, #14, and #64. C-GALF1 is a signal for an 8-bit synchronization.

Upon receiving C-GALF1, the remote side establishes an 8-bit synchronization and transmits R-FLAG1 to the upstream using carrier indexes #7 and #9. R-FLAG1 is a signal for an 8-bit synchronization.

Upon receiving R-FLAG1, the center side establishes an 8-bit synchronization and transmits C-FLAG1 to the downstream using carrier indexes #12, #14, and #64. C-FLAG1 is a signal for an 8-bit synchronization.

Upon receiving C-FLAG1, the remote side proceeds to exchange manufacturers code and functional information within the sequence.

Fig. 3 (b) is a sequence chart illustrating a startup sequence initiated by the center side. The center side initially transmits C-TONES to the remote side. When the remote side returns R-TONE1, the above-described sequence follows.

During the above startup sequence, both remote and center sides monitor a period since a signal is transmitted until a response signal is received. When there is no response within a predetermined period (timeout), the transmission is considered to have an error and the sequence is started over. Specifically, τ1 is set smaller than 50 ms, and τ2 is set greater than or equal to 50 ms but smaller than 500 ms. When no response is received within the above set period, it is considered as "connection impossible".

According to the present embodiment, when it is determined as "connection is impossible", the carrier index numbers to be used for the downstream are changed. When the error persists even with the changes, the gain amount of the transmitted carriers is increased.

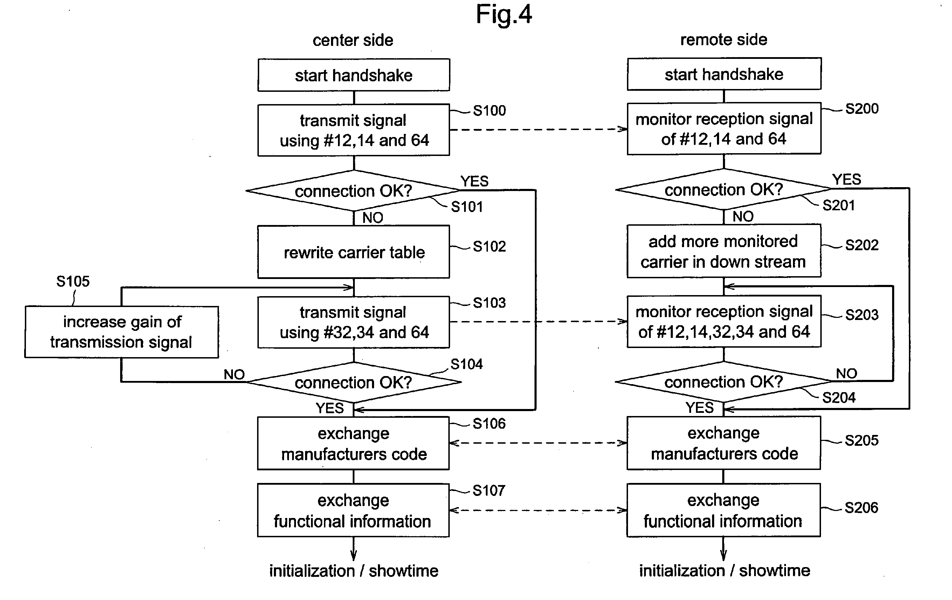

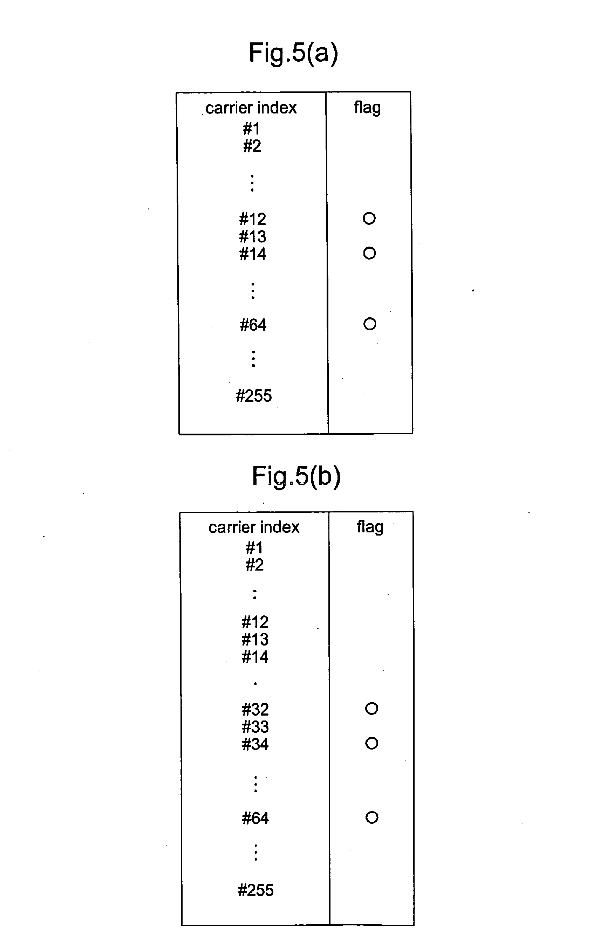

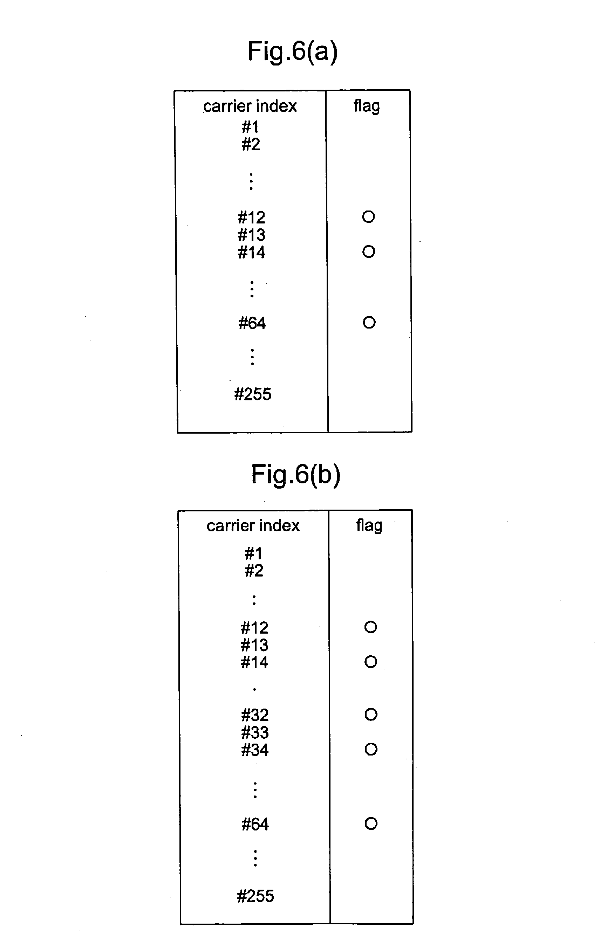

Fig. 4 is a flowchart illustrating a flowchart for the handshake sequence between the remote and center sides. Both remote and center sides separately have a carrier table in RAM 33 of the ADSL modem apparatus; the carrier table having flags for carriers to be used to the downstream during the handshake sequence. Fig. 5 (a) illustrates a carrier table programmed for the center ADSL modem apparatus, while Fig. 6 (a) illustrates a carrier table programmed for the remote ADSL modem apparatus 2. As shown in the figures, both initial carrier tables have flags posted on carrier indexes #12, #14, and #64, all of which are preset as carriers, by G.hs, to be used for the downstream. In this example, carrier indexes #12, #14, and #64 are specified carriers preset by the communication standard.

As shown in Fig. 4, the center ADSL modem apparatus transmits a signal regulated by the handshake sequence (e.g., C-TONES) using carrier indexes #12, #14, and #64 according to the carrier table of Fig. 5 (a) (step S100). At this time, the processor functions as a transmitter.

The remote ADSL modem apparatus 2 receives the signal from line via receiver 17. Sampling data sampled by AFE 13 is converted into constellation data for each carrier, by an FFT of FFT unit 27. Processor 20 retrieves the FFT output and monitors constellation data for carrier indexes #12, #14, and #64 from the downstream signal according to the carrier table of Fig. 6 (a) (step S200). At this time, processor 20 functions as a receiver.

When the distance between the center ADSL modem apparatus and remote ADSL modem apparatus 2 is short enough, or when the interference of the noise is small, carrier indexes #12, #14, and #64 can successfully reach the remote side. However, when there is a long distance between the center ADSL modem apparatus and remote ADSL modem apparatus 2, or when the interference of the noise is large, carrier indexes #12, #14, and #64 fail to normally reach the remote side.

As shown in Figs. 3 (a) and (b), the remote ADSL modem apparatus 2 determines that "connection is impossible", when the signal of carrier indexes #12, #14, and #64 cannot be detected even after predetermined time τ1 or τ2, upon waiting for the signal from the center ADSL modem apparatus (step S201). In addition to when a signal cannot be detected, situations where the received signal is different from the expected signal (e.g., the symbol pattern is different from the expected pattern, or the topology inversion is performed different from the expected inversion order) are also considered as "connection impossible".

When it is determined that the connection is OK at step S201, the remote ADSL modem apparatus 2 executes the following operation in accordance with G.hs, by transmitting a signal (preset by G.hs) using carrier indexes #7 and #9 within a predetermined time as shown in Fig. 3.

When it is determined that the connection is impossible at step S201, the remote ADSL modem apparatus 2 is unable to transmit the signal preset by G.hs. Therefore, the carrier table of Fig. 6 (a) is rewritten to that of Fig. 6 (b). In other words, carrier indexes #32 and # 34 are added to #12, #14, and #64 for monitoring the downstream signal (step S202).

Upon transmitting the signal preset by G.hs at step S100, the center ADSL modem apparatus monitors carrier indexes #7 and #9 used for the upstream, in order to determine whether the apparatus is connected to the remote ADSL modem apparatus 2 (step S101). When the signal (of carrier indexes #7 and #9) from the remote ADSL modem apparatus 2 cannot be detected during the predetermined time regulated by G.hs since the signal transmission of step S100, it implies that the transmitted signal at step S100 has not successfully reached the remote ADSL modem apparatus 2.

When it is determined that the center apparatus has failed to normally connect to the remote ADSL modem apparatus 2 at step S101, the carrier table shown in Fig. 5 (a) is rewritten into that of Fig. 5 (b) (step S102). In other words, the carriers to be used for the downstream are changed into carrier indexes #32, #34, and #64. Accordingly, when the apparatuses are far apart, carrier indexes #12 and #14, which are largely interfered by the upstream carriers (carrier indexes #7 and #9), are replaced with alternate carrier indexes #32 and #34, which are distant enough from carrier indexes #7 and #9.

The center ADSL modem apparatus retransmits a signal using carrier indexes #32, #34, and #64 that are separated from carrier indexes #7 and #9 (step S103). This time, the processor of the center ADSL modem apparatus functions as a re-transmitter.

The remote ADSL modem apparatus 2 monitors a downstream signal by referring to the carrier table changed at step S202 (Fig. 6 (b)) (step S203). In particular, when the first reception is not successful, the center ADSL modem apparatus changes the lower frequency carriers into the alternate carriers. Therefore, the changed carriers (#32 and #34) and the original carriers (#12, #14, and #64) are simultaneously checked.

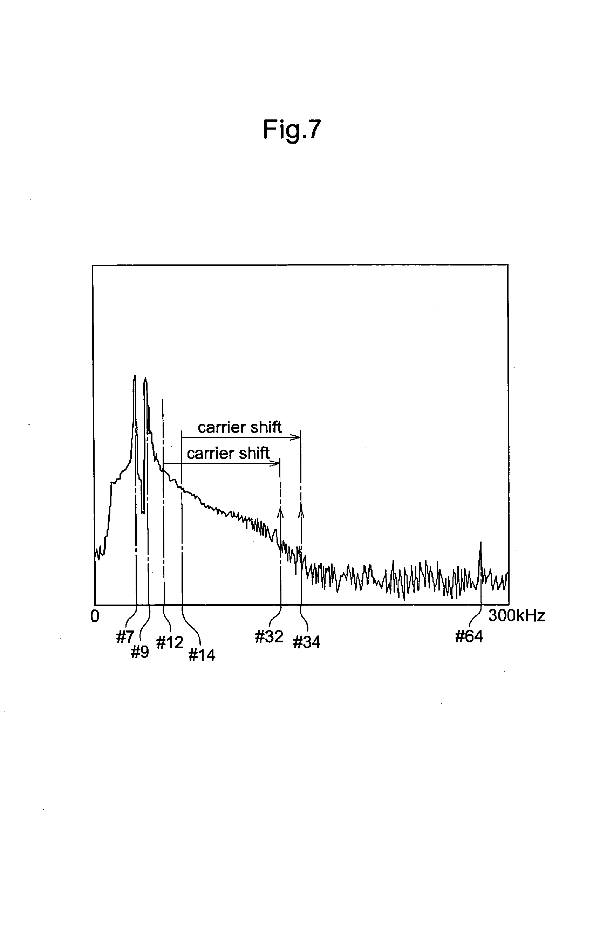

Fig. 7 illustrates a reception spectrum of the remote ADSL modem apparatus 2, showing the diagram of the spectrum when the downstream carriers are changed from carrier indexes #7 and #9 into carrier indexes #32 and #34. As shown in the figure, by changing the downstream carriers from carrier indexes #12 and #14 into carrier indexes #32 and #34, the entire downstream carriers (indexes #32, #34, and #64) are shifted to a band where there is no influence of the skirt phenomenon cased by carrier indexes #7 and #9. Therefore, it is possible to have a normal reception at the remote ADSL modem apparatus 2.

Accordingly, when it is impossible to have a connection with the signal transmission of indexes #12 and #14 set by G.hs, carriers are changed from indexes #12, #14, and #64 into indexes #32, #34, and #64 at the center side. Therefore, the remote side can monitor extended carrier indexes #12, #14, #32, #34, and #64, thereby making it possible to prevent the skirt phenomenon by carrier indexes #7 and #9, and to securely the deliver downstream carriers to the remote side.

Since the remote side monitors extended carrier indexes #12, #14, #32, #34, and #64, the remote side can respond to situation where the center side retransmits a signal using carrier indexes #12, #14, and #64, which can be expected especially when the center ADSL modem apparatus side does not have a function to shift carriers. Depending on the communication status, the signal may reach the remote side (by the retransmission). Therefore, the remote side can also execute necessary sequence without having errors even in this situation. Since the remote ADSL modem apparatus 2 is not aware of what kind of carrier shift function is available for the center ADSL modem apparatus, prior to the manufacturers code and functional information exchange, it is preferable to extend carriers to be monitored before exchanging the manufacturers code and functional information.

Upon having a normal reception of carrier indexes #32, #34, and #64 (step S204), due to the downstream carrier change, the remote side ADSL modem apparatus 2 transmits a signal preset by G.hs.

When carrier indexes #32, #34, and #64 fail to be normally received, the remote side waits for another signal transmission from the center ADSL modem apparatus, without transmitting a signal preset by G.hs. Although it is not shown in the figure, the error termination is performed when an appropriate signal cannot be received even after a predetermined time period.

When a signal in accordance with the sequence is not transmitted back from the remote ADSL modem apparatus 2 within a predetermined time period (step S104), in response to the signal transmitted at step S103, the center ADSL modem apparatus increases the gain amount of the downstream carrier (indexes #12, #14, #32, #34, and #64) (step S105). The following illustrates the gain amount increasing process with reference to Fig. 2. Processor 20 instructs AFE 13 to increase the level of a signal (to be transmitted to downstream) up to a predetermined amount. AFE 13 includes a gain control function that can execute the gain increasing process for the downstream, after receiving the instruction from processor 20. It is noted that driver 15 can be provided with the gain control.

Accordingly, signal gain amounts of carrier indexes #12, #14, #32, #34, and #64 (to be transmitted at step S103) are increased. When the remote ADSL modem apparatus 2 checks carrier indexes #12, #14, #32, #34, and #64 at step S203, signal levels of carrier indexes #32, #34, and #64 become increased. Therefore, it is possible to detect signals that are interfered by noise, due to the signal attenuation.

When the center side determines that the downstream carriers are not reaching the remote side, the gain amounts of the downstream carriers are increased, thereby preventing errors due to the signal attenuation and providing long distance communication. Furthermore, gain amounts of carriers are increased only when the signals cannot be delivered after carrier shifting. Therefore, it is possible to avoid influencing other lines as much as possible.

Upon determining that the connection is OK at step S104, the center ADSL modem apparatus exchanges signal that are preset by G.hs. Such exchange includes manufacturers codes (step S106) and function information (step S107).

In addition, upon receiving a normal value at step S104, the remote ADSL modem apparatus 2 exchanges signal that are preset by G.hs. Such exchange includes manufacturers codes (step S205) and function information (step S206).

When the handshake sequence based on G.hs is completed with the above procedure, the initialization sequence determined by the handshake sequence is executed, which is followed by the SHOWTIME sequence.

The above illustration explained the shifting/extension of carrier indexes #12 and #14 into indexes #32 and #34, for carrier shifting and monitoring at steps S102 and S202. However, other carriers can be used (instead of indexes #32 and #34) as long as the carriers are in a frequency range that can decrease the interference from the upstream signals. It is preferable that the alternate carriers are set between indexes #15 and #40. The lower threshold of the alternate carrier index #15 is in a higher frequency side and thusly has a smaller interference of the upstream signal than carrier index #14. The upper threshold of the alternate carrier index #40 is at a point where the signal attenuation amount becomes too large. When a carrier index bigger than index #40 is used, the communication becomes difficult to conduct due to the large signal attenuation amount. It is even more preferable that a carrier index smaller than #34 or #35 is used, as shown in Fig. 7, where the signal amount starts attenuated at the proximity of carrier index #34 or #35.

In addition, in the above illustration, the remote ADSL modem apparatus 2 extends monitored carriers at step S202. However, center side can monitor only alternate carriers (#32 and #34) to be shifted and carrier index #64. In this case, it is preferable that analog filter 17 of the receiver side, at remote ADSL modem apparatus 2, is controlled as follows.

In particular, alternate carrier indexes #32 and #34, and specified carrier index #64 are selected as monitored carrier at step S202, and are monitored at step S203 of Fig. 4.

When monitored carriers are shifted at step S202, analog filter 17 sets suitable filter characteristics in order to remove noise generated from indexes #7 and #9. Specifically, signal components that interfere with downstream signals are removed from upstream carrier indexes #7 and #9, within a range that the downstream signal is influenced from the skirt phenomenon. Since alternate carrier indexes #32 and #34, and specified carrier index #64 are far enough from cut frequency set at analog filter 17, the carriers can pass analog filter 17 and be retrieved. In addition, since the signal component in the proximity of carrier indexes #7 and #9 are cut, the signal is retrieved after removing noise, which improves the reliability of the signal. Further, instead of using the filter only when monitored carriers are shifted at step S202, a filter, removing signal component of carrier indexes smaller than #12, can be permanently used in order to filter downstream signals.

Furthermore, in the above illustration, transmitting carriers and monitored carriers are shifted when it is determined that the connection is impossible at steps S101 (center side) and S201 (remote side) of Fig. 4. However, instead of having impossible connection as a precondition, the center side can use carriers between carrier indexes #15 and #40 for signal transmission from the beginning, so that the remote side monitors carriers between carrier indexes #15 and #40.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

This application is based on the Japanese Patent Application No. 2002-226531 filed on August 2, 2002, entire content of which is expressly incorporated by reference herein.

## Claims

1. An ADSL modem apparatus comprising:
a transmitter that transmits a downstream signal by using a specified carrier preset by a communication standard, when a handshake sequence is initiated; and
a re-transmitter that retransmits a downstream signal by using an alternate carrier shifted toward a higher frequency, instead of the specified carrier in a proximity of carriers used for an upstream, when a line connection with an opposing ADSL modem apparatus fails during a signal transmission using the specified carrier.

2. The ADSL modem apparatus according to claim 1, wherein when a line connection with an opposing ADSL modem apparatus fails even after a signal transmission using the alternate carrier by said re-transmitter, a gain amount of the downstream signal is increased.

3. The ADSL modem apparatus according to claim 1, wherein said re-transmitter uses a carrier having carrier index set between #15 and #40 as the alternate carrier.

4. The ADSL modem apparatus according to claim 1, wherein said re-transmitter selects a plurality of carriers having mutually proximate carrier indexes as alternate carriers.

5. An ADSL modem apparatus comprising:
a receiver that detects a signal of a specified carrier preset by a communication standard from a downstream reception signal, when a handshake sequence is initiated; and
a re-receiver that detects an alternate carrier signal in accordance with a carrier change made by a transmitter side, when the signal of the specified carrier fails to be normally received within a predetermined time since the handshake sequence is initiated.

6. The ADSL modem apparatus according to claim 5, wherein said receiver tries to detect a signal using both the specified carrier and the alternate carrier.

7. The ADSL modem apparatus according to claim 5, further comprising:
a filter that removes noise generated from an upstream signal during the handshake sequence, said filter being used for filtering before said receiver retrieves the downstream reception signal.

8. An ADSL modem apparatus comprising:
a handshake communication unit that receives a downstream signal using a carrier having carrier index set between #15 and #40 during a handshake sequence;
an initialization communication unit that executes an initialization sequence after the handshake sequence is executed; and
a show-time communication unit that executes the show-time sequence after the initialization sequence is executed.

9. The ADSL modem apparatus according to claim 8, further comprising:
a filter that removes a signal having frequencies of carrier indexes #7 and #9 when the downstream signal is being received.

10. An ADSL modem apparatus comprising:
a handshake communication unit that executes a handshake sequence for transmitting a downstream signal using a carrier of carrier index set between #15 and #40 during the handshake sequence;
an initialization communication unit that executes an initialization sequence after the handshake sequence is executed; and
a show-time communication unit that executes the show-time sequence after the initialization sequence is executed.

11. A communication method comprising:
transmitting a downstream signal by using a specified carrier preset by a communication standard, when a handshake sequence is initiated; and
re-transmitting a downstream signal by using an alternate carrier shifted toward a higher frequency instead of the specified carrier in the proximity of carriers used for an upstream, when a line connection with an opposing ADSL modem apparatus fails during a signal transmission using the specified carrier.

12. A communication method comprising:
detecting a signal of a specified carrier preset by a communication standard from a downstream reception signal, when a handshake sequence is initiated;
detecting an alternate carrier signal in accordance with a carrier change made by a transmitter side, when the signal of the specified carrier fails to be normally received within a predetermined time since the handshake sequence is initiated;
executing a following sequence after a normal reception of the signal of either one of specified carrier and alternate carrier; and
performing an error termination when the normal reception cannot be performed.
